(19) Europäisches Patentamt

European Patent Office

Office européen des brevets

(11) **EP 0 421 238 B1**

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(51) Int Cl.6: **C08L 63/00**, C08L 101/00, C09D 5/44, C09D 201/00

(21) Anmeldenummer: **90118375.6**

(22) Anmeldetag: **25.09.1990**

(54) **Verwendung von vernetzten Polymermikroteilchen in Lacken als Füllstoffersatz und/oder als vernetzender Füllstoff**

Use of crosslinked polymer microparticles as a filter substitute and/or a hardening filler in coatings

Utilisation de micro-particules de polymères réticulés comme charge de substitution et/ou comme charge durcissante pour peintures

(84) Benannte Vertragsstaaten:
**AT BE DE DK ES FR GB IT NL SE**

(30) Priorität: **30.09.1989 DE 3932816**

(43) Veröffentlichungstag der Anmeldung:
**10.04.1991 Patentblatt 1991/15**

(73) Patentinhaber: **HOECHST AKTIENGESELLSCHAFT
65926 Frankfurt am Main (DE)**

(72) Erfinder:
• **Hönel, Michael, Dr.
D-6200 Wiesbaden (DE)**
• **Walz, Gerd, Dr.
D-6200 Wiesbaden (DE)**
• **Ziegler, Peter, Dr.
D-6500 Mainz (DE)**
• **Kubillus, Uwe, Dr.
D-6200 Wiesbaden (DE)**

(56) Entgegenhaltungen:
**EP-A- 0 016 733       EP-A- 0 282 000
EP-A- 0 346 742       EP-A- 0 351 141
EP-A- 0 381 347       EP-A- 0 415 593
EP-A- 0 416 762       US-A- 3 836 495**

## Beschreibung

Der Zusatz von Weißpigmenten, wie Titandioxid, zur Farbaufhellung und als Füllstoff in Lacken, insbesondere wäßrigen Elektrotauchlacken und Füllerlacken für den Autosektor ist hinreichend bekannt. Nachteilig ist dabei unter anderem, daß durch das relativ hohe spezifische Gewicht mancher Weißpigmente, insbesondere des Titandioxids, das (spezifische) Gewicht des Lackes und des daraus erhaltenen Lackfilmes recht beträchtlich ist und die Ergiebigkeit des Lackes nicht immer befriedigt. Außerdem liegt insbesondere bei Titandioxid der Preis recht hoch. Hinzu kommt noch, daß die Sedimentationsneigung derartiger Lacksysteme für praktische Einsatzzwecke häufig störend und die Einbindung der Weißpigmente in den gehärteten Lackfilm nicht immer ausreichend ist.

Es bestand daher das Bedürfnis, diese Nachteile ganz oder zumindest teilweise zu beseitigen und insbesondere die Weißpigmente, vor allem Titandioxid, in Lacken zumindest teilweise durch spezifisch leichtere, preiswertere Stoffe zu ersetzen, ohne dabei Eigenschaften des Lackes, wie Applikations- und Verlaufeigenschaften sowie Steinschlagbeständigkeit, Korrosionsschutz und Zwischenschichthaftung zu verschlechtern.

Zur Lösung dieser Aufgabe schlägt die Erfindung die Verwendung von vernetzten Polymer-Mikrogelteilchen als Füllstoff und/oder als teilweiser Ersatz von Weißpigmenten in wäßrigen Lackzubereitungen vor, dadurch gekennzeichnet, daß die Polymer-Mikrogelteilchen

- noch vernetzungsaktive Zentren enthalten,
- eine mittlere Teilchengröße von höchstens 5 μm besitzen,
- eine Glasübergangstemperatur von mindestens 30 °C aufweisen, und
- durch Umsetzung von epoxygruppenhaltigen Verbindungen (a) mit Polyaminen (b) hergestellt worden sind, wobei die Funktionalität von (a) größer als 1 ist, und die Funktionalität von (b) im statistischen Mittel 2 oder größer als 2 ist.

Weiterhin bezieht sich die Erfindung auf eine flockungsstabile wäßrige Dispersion von vernetzten Polymermikroteilchen mit mittleren Teilchengrößen von höchstens 5 μm, einem Gehalt an vernetzten Polymermikroteilchen von mindestens 20 Gew.-%, bezogen auf die Dispersion einer Glasübergangstemperatur (Tg) von mindestens +30°C, wobei die vernetzten Polymermikroteilchen hergestellt worden sind durch Umsatz von epoxygruppenhaltigen Verbindungen (a) mit Polyaminen (b), und wobei die Funktionalität von (a) größer als eins und von (b) gleich oder größer als zwei ist.

Schließlich hat die Erfindung auch wäßrige, gegebenenfalls Weißpigmente und andere übliche Lackadditive enthaltende Lackzubereitungen zum Gegenstand, welche die obigen wäßrigen Dispersionen oder die daraus isolierten vernetzten Polymermikroteilchen enthalten.

Die vernetzten Polymermikroteilchen (Mikrogele) dienen, wie erwähnt, erfindungsgemäß zum teilweisen Ersatz von Weißpigmenten in Lacken, insbesondere solchen auf Wasserbasis, sowie teilweise auch als vernetzende Füllstoffe und als Füllstoff für Transparentlacke.

Die Weißpigmente besitzen vorzugsweise eine überwiegend sphärische Teilchenform und ein spezifisches Gewicht von mindestens 2,0 , im allgemeinen von mindestens 4 $g/cm^3$. Insbesondere handelt es sich hierbei um Titandioxid. Daneben kommen auch basisches Bleisilikat, Lithopone, Zinkoxid, Bentone, Zinksulfid und Füllstoffe wie Talkum, Kaolin, Glimmer, Feldspat, $BaSO_4$ (blanc fixe), $CaSO_4$, $CaCO_3$ und $CaO$ in Frage. Da die erfindungsgemäß eingesetzten Mikrogele gleichfalls eine überwiegend sphärische Teilchenform aufweisen, tritt durch den teilweisen Ersatz, der zumeist 10 - 100 Gew.-%, vorzugsweise 15 - 90 Gew.-% und insbesondere 22 - 85 Gew.-% der ansonsten vorhandenen Weißpigment-(Titandioxid)menge beträgt, keine größere Änderung der rheologischen Eigenschaften des Lacksystems ein.

Als Lacke auf Wasserbasis - was hier bedeuten soll, daß diese höchstens 20 Gew.-%, vorzugsweise höchstens 10 Gew.-%, bezogen auf Wasser, an üblichen Lacklösemitteln enthalten - kommen vor allem die gebräuchlichen Elektrotauchlacke für die Grundierung von Fahrzeugkarosserien in Frage. Derartige Elektrotauchlacke, bei denen als Bindemittelharze zumeist kationische Epoxidaminaddukte, Polyurethane bzw. Polyharnstoffe, Polyester und gemische Addukte bzw. Kondensate dienen, sind beispielsweise in den DE-Offenlegungsschriften 36 44 371, 37 26 497 und 38 09 655 sowie in den EP-Offenlegungsschriften 234 395 und 301 293 beschrieben. Weitere hierfür geeignete Harze sind im Journal of Coatings Technology, Vo. 54, No. 686, (1982), S. 33 bis 41 ("Polymer Compositions for Cationic Electodepositable Coatings") offenbart, worauf gleichfalls Bezug genommen wird.

Andere Lacksysteme, in denen Weißpigmente erfindungsgemäß durch Mikrogele partiell ersetzt werden könne, sind die bekannten Füllerlacke, die vor allem in der Fahrzeugindustrie als Schicht zwischen Grundierung und Decklack aufgebracht werden und einerseits zum Ausgleich von Unregelmäßigkeiten in der Grundierung dienen, wodurch ein einwandfreies Aussehen des Decklackes gewährleistet werden soll, andererseits eine Verbesserung des Steinschlagschutzes der Gesamtlackierung bewirken (vgl. hierzu OMYA; Technische Mitteilung Nr. 316: "Wasserverdünnbare Füller für industrielle Anwendungen" und EP-OS 249727). Als Bindemittelharze für wäßrige Füllerlacke kommen Bindemittel gemäß der EP-OS 249.727 und EP-OS 269.828 in Betracht und bevorzugt Polyurethanharze, wie in der DE-Patentanmeldung 38 28 157 beschrieben.

Der Zusatz der Mikrogele zum Lack kann bevorzugt in Form einer wäßrigen, vorzugsweise flockungsstabilen Dispersion oder auch in Form des isolierten Mikrogels erfolgen, wobei die Isolierung des Mikrogels aus der Dispersion nach bekannten Methoden, wie Elektrolytfällung, Sprühtrocknung oder Zentrifugieren geschieht. Auch für die Art der Zugabe des Mikrogels (isoliert oder als Dispersion) zum Lack bieten sich mehrere Möglichkeiten an: zum einen kann die Zugabe bereits zur Bindemittelharz-Dispersion erfolgen oder aber das Mikrogel wird zunächst der Pigmentpaste, welche in bekannter Weise aus Pigmentpastenharzen und den üblichen Lackadditiven (Pigmente, Füllstoffe, Katalysatoren udgl.) besteht, vor, während oder bevorzugt nach der sogenannten Pigmentanreibung beigemischt und die Pigmentpaste wird dann der Bindemittelharz-Dispersion zugegeben. Des weiteren kann das Mikrogel auch, wenngleich weniger bevorzugt, dem Lack zugegeben werden.

Die durchschnittliche Teilchengröße (Primärkorngröße) der erfindungsgemäßen Mikrogele liegt vorzugsweise unterhalb von 2 µm und insbesondere zwischen 0,3 und 1,0 µm, und die Glasübergangstemperaturen (der isolierten Mikrogele) betragen vorzugsweise 50 bis 140°C. Das spezifische Gewicht ist im allgemeinen vergleichbar demjenigen des eingesetzten Bindemittelharzes und ist im allgemeinen kleiner als 1,5 g/cm$^3$.

Im Falle der bevorzugt verwendeten (wäßrigen) flockungsstabilen Mikrogeldispersionen liegt der Gehalt an Mikrogel zumeist bei 20 bis 70 Gew.-%, vorzugsweise bei 40 bis 65 Gew.-% und insbesondere bei 45 bis 55 Gew.-%, bezogen auf die Dispersion. Die Viskosität der Mikrogeldispersionen liegt zwischen 10 bis 6000, mPa·s und vorzugsweise zwischen 10 und 2000 mPas und insbesondere zwischen 20 und 500 mPa·s (gemessen nach Brookfield bei 25°C.

Unter flockungsstabil sei dabei verstanden, daß diese Dispersionen auch während mehrerer Tage, zumeist auch während mehrerer Wochen keine (irreversiblen) Sedimentationserscheinungen zeigen und einen Siebrückstand von kleiner als 50 mg/l, vorzugsweise von 0 bis 30 mg/l (Filtration über 30 µm-Maschenweite) aufweisen.

Bevorzugt enthalten die erfindungsgemäß eingesetzten Mikrogele vernetzungsaktive Zentren, die bei Raumtemperatur noch nicht wirksam sind. Genannt seien hier beispielsweise Hydroxylgruppen, primäre oder sekundäre Aminogruppen, Carboxylgruppen, verkappte Isocyanatgruppen (Urethangruppen) etc. oder Gemische davon, siehe hierzu auch W.E. Funke, J. of Coatings Technol., Vol. 60 (No. 767), S. 67-76 (1988). Auf diese Weise wird das Mikrogel durch Härtung bei erhöhter Temperatur, gegebenenfalls in Anwesenheit eines Katalysators, besonders fest in den gehärteten Lackfilmen eingebaut und wirkt auch selbst als Vernetzer (vernetzender Füllstoff). Bei gleichzeitiger Anwesenheit beispielsweise von Hydroxylgruppen und/oder prim. und/oder sek. Aminogruppen sowie von verkappten Isocyanatgruppen sind die Mikrogele sogar selbstvernetzend.

Die als vernetzungsaktive Zentren bevorzugt vorhandenen verkappten Isocyanatgruppen werden in üblicher Weise über teilverkappte Polyisocyanate in das Mikrogel eingeführt. Dies kann beispielsweise bereits bei den Vorstufen des Mikrogels, z. B. bei den Polyepoxiden im Falle der bevorzugten Mikrogele, auf Epoxidbasis, erfolgen oder erst bei dem fertigen Mikrogel. Voraussetzung ist dabei naturgemäß, daß diese Vorstufen oder das fertige Mikrogel für die Reaktion mit dem teilverkappten Polyisocyanat geeignete Gruppen enthält. Als Polyisocyanat sind die auf dem Polyurethan- bzw. Lackgebiet bekannten Polyisocyanate, beispielsweise aliphatische, cycloaliphatische oder aromatische Polyisocyanate einsetzbar. Typische Beispiele für die derartige Polyisocyanate sind: Xylylendiisocyanat, Diphenylmethan-4,4′-diisocyanat, Triphenylmethyl-4,4′,4″-triisocyanat, Triphenylmethantriisocyanat, Polyphenylpolymethylisocyanat, 2,2,4(2,4,4)-Methylcyclohexyldiioscyanat, Dicyclohexylmethyldiisocyanat, Diethylfumarhexylisocyanat, Bis-(3-Methyl-4-isocyanatocyclo-hexyl)-methan, 2,2-Bis-(4-isocyanatocyclohexyl)-propan, der Methylester des Lysindiisocyanats, das Biuret des Hexamethylendiisocyanats, Diisocyanate dimerer Säuren, 1-Methyl-benzol-2,4,5-triisocyanat, Bisphenyl-2,2,4′-triisocyanat, das Triisocyanat aus 3 Mol Hexamethylendiisocyanat und 1 Mol Wasser mit 16 % NCO-Gehalt und weitere, wenigstens zwei NCO-Gruppen pro Molekül enthaltende Verbindungen, vorzugsweise Isophorondiisocyanat, Hexamethylendiioscyanat sowie Tri- und Tetramethylhexamethylendiisocyanat, insbesondere aber 2,4- oder 2,6-Toluylendiisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen enthaltenden Präpolymeren, wie sie insbesondere durch Umsetzung der oben genannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind.

Die Verkappungsmittel sollen so beschaffen sein, daß sie bereits unter den bevorzugten Härtungstemperaturen von 130 bis 180°C, gegebenenfalls in Gegenwart der hierfür bekannten Katalysatoren, wieder abspalten.

Beispiele für derartige Verkappungsmittel sind: aliphatische, cycloaliphatische oder alkylaromatische (einwertige) Alkohole, zum Beispiel niedere aliphatische Alkohole wie Methyl-, Ethylalkohol, die verschiedenen Propyl-, Butyl- und Hexylalkohole, Heptyl-, Octyl-, Nonyl-, Decylalkohol und ähnliche; Methoxy- (1- bzw. 2-)propanol; ferner ungesättigte Alkohole wie Allylalkohole, Propargylalkohole, cycloaliphatische Alkohole wie Cyclopentanol, Cyclohexanol, alkylaromatische Alkohole wie Benzylalkohol, 2-Pyridinylcarbinol, Methyl- sowie p-Methoxy- und p-Nitrobenzylalkohol und Monoäther von Glykolen, wie Ethylen-glykolmonoethyläther, -monobutyläther und ähnliche. Weitere Verkappungsmittel sind Ketoxime, zweckmäßigerweise mit 3 bis 20 C-Atomen, vorzugsweise 3 bis 10 C-Atomen, wie Acetonoxim, Methylethylketonoxim (= Butanonoxim), Hexanonoxim (wie Methyl-Butylketonoxim), Heptanonoxim (wie Methyle-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Pyrazole, Aminoalkohole wie Diethylethanolamin und spezielle Amine, wie Dibutylamin. Bevorzugt sind hierbei 2-Ethylhexanol, Butyldiglykol, Butylglykol, 3-Methyl-3-methoxybutanol, Pyridinylcarbinol, Butanonoxim.

Die erfindungsgemäß verwendeten Mikrogele werden bevorzugt durch Umsatz epoxygruppenhaltiger Verbindungen (a) mit Polyaminen (b) hergestellt, wobei die Funktionalität bei (a) größer als eins, vorzugsweise 2 - 10, und insbesondere 2 - 3 und von (b) im statistischen Mittel zwei oder größer als zwei, vorzugsweise 2,1 bis 12 und insbesondere 3 bis 8 ist. Vorzugsweise erfolgt dabei dieser Umsatz von (a) und (b) im wäßrigen Milieu. Anstelle der epoxygruppenhaltigen Verbindungen können - wenngleich weniger bevorzugt - auch die entsprechenden cyclocarbonatgruppenhaltigen Verbindungen eingesetzt werden, die aus ersteren in bekannter Weise durch Umsatz mit $CO_2$ erhalten werden (vgl. hierzu die DE-Offenlegungsschriften 37 26 497, 36 44 373 und 36 44 372).

Das Molekulargewicht $\overline{M}_n$ der epoxygruppenhaltigen Verbindungen (a) (Zahlenmittel, bestimmt mit der Gelchromatographie, PS-Standard) von (a) sollte im allgemeinen zwischen 100 und 10000, vorzugsweise zwischen 150 und 3500 liegen und das Epoxid-Äquivalentgewicht zwischen 100 und 10000, vorzugsweise 150 und 1500. Die Epoxidgruppen sind vorzugsweise endständig, jedoch können in manchen Fällen auch Verbindungen als Komponente (a) eingesetzt werden, welche diese Gruppen in statistischer Verteilung über die Molekülkette enthalten und die durch Emulsions-Copolymerisation unter Verwendung von olefinisch ungesättigten, diese Epoxydgruppen enthaltenden Verbindungen hergestellt werden können, wie z.B. Glycidylester der Acryl- bzw. Methacrylsäure.

Geeignete epoxygruppenhaltige Verbindungen (a) sind Polyepoxide mit im Mittel mehr als einer Epoxidgruppe pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich bei diesen Epoxidverbindungen um Polyglycidylether auf Basis von mehrwertigen, vorzugsweise zweiwertigen Alkoholen, Polyetherdiole, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 150 und 2000, insbesondere zwischen 170 und 500. Als mehrwertige Phenole sind beispielsweise zu nennen: Resorcin, Hydrochinon, 2,2-Bis(4-hydroxyphenyl)-propan (Bisphenol A), Isomerengemische des Dihydroxydiphenylmethans (Bisphenol F), Tetrabrombisphenol A, 4,4′-Dihydroxydiphenylcyclohexan, 4,4′-Dihydroxy-3,3′-dimethyldiphenylpropan, 4,4′-Dihydroxydiphenyl, 4,4′-Dihydroxybenzophenon, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. sowie die Chlorierungs- und Bromierungsprodukte der vorstehend genannten Verbindungen. Bisphenol A ist hierbei besonders bevorzugt

Auch die Polyglycidyläther von mehrwertigen Alkoholen sind geeignet. Als Beispiele derartiger mehrwertiger Alkohole seien Äthylenglykol, Diäthylenglykol, Triäthylenglykol, 1,2-Propylenglykol, Polyoxypropylenglykole (n = 1-10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäuren, Bernsteinsäure, Polyglykoldisäuren, Adipinsäure, Glutarsäure, Phthalsäure, Terephthalsäure, Dodecenylbernsteinsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A.M. Paquin, Springer Verlag, Berlin 1958, Kapitel IV und in Lee, Neville "Handbook of Epoxy Resins", 1967, Chapter 2. Es können auch Mischungen von mehreren Epoxidverbindungen verwendet werden oder auch Gemische von Polyepoxid - mit Monoepoxidverbindungen.

Diese epoxydgruppenhaltigen Verbindungen (a) werden bevorzugt in Form von flockungsstabilen, wäßrigen Dispersionen eingesetzt, wobei die Flockungsstabilität durch externe Emulgatoren (vgl. u.a. US-PS 4 122 067 und EP-OS 81 163) oder bevorzugt durch innere, statistisch in (a) eingebaute Emulgatoren hergestellt wird. Im letzteren Falle spricht man auch von selbstemulgierenden Polyepoxiden. Diese besitzen in der Regel ein Epoxidäquivalentgewicht zwischen 250 und 10 000 und stellen Kondensationsprodukte dar aus

α)   50 bis 80 Gew.-% einer Epoxidverbindung mit mindestens zwei Epoxidgruppen pro Molekül und einem Epoxidäquivalentgewicht von 100 bis 2000,

β)   35 bis 17 Gew.-% eines aromatischen Polyols und

γ)   15 bis 3 Gew.-% eines Kondensationsproduktes aus einem aliphatischen Polyol mit einem mittleren Molekulargewicht (Mw) von 200 bis 20 000, einer Epoxidverbindung mit mindestens zwei Epoxidgruppen pro Molekül und einem Epoxidäquivalentgewicht von 100 bis 2000 sowie gegebenenfalls aus einem Mono- und/oder Polyisocyanat, wobei das Äquivalentverhältnis der OH-Gruppen zu den Epoxidgruppen 1:0,85 bis 1:3,5 vorzugsweise 1: 0,85 bis 1:1,5 oder 1:1,8 bis 1:3,5, ist, die Menge an gegebenenfalls vorhandenen Mono- und/oder Polyisocyanaten 0,05 bis 5 Gew.-%, bezogen auf die Menge aus aliphatischem Polyol und Epoxidverbindung, beträgt, und das Epoxidäquivalentgewicht dieses Kondensationsproduktes zwischen 200 und mindestens 50 000, vorzugsweise zwischen 400 und 10 000 oder bei mindestens 100 000, liegt.

Beispiele für derartige selbstemulgierenden Polyepoxide (a) und entsprechende Dispersionen sind in den DE-Offenlegungsschriften 3 643 751 und 3 820 301 sowie in der EP-Offenlegungsschrift 51 483 beschrieben, auf die hier Bezug genommen wird.

Die wäßrigen Dispersionen der Polyepoxide (a) können gegebenenfalls bereits übliche Lack-Additive, wie u.a. Härter (z.B. vollverkappte Polyisocyanate) enthalten.

Wie bereits weiter oben erwähnt, besitzen diese Polyepoxide (a) gegebenenfalls bereits vernetzungsaktive Zentren, insbesondere Hydroxylgruppen und/oder verkappte Isocyanatgruppen.

Die Polyamine (b) weisen vorzugsweise eine Funktionalität von größer als zwei, insbesondere von 3 bis 8 auf, wobei eine primäre Aminogruppe gegenüber (a) difunktionell wirkt, da sie mit einer Epoxidgruppe zweifach reagieren kann. Bevorzugt ist das Polyamin wasserlöslich. Neben primären und/oder sekundären Aminogruppen entsprechend der obigen Funktionalität kann (b) noch andere Gruppen enthalten, wie verkappte (primäre) Aminogruppen (Ketimingruppen), tertiäre Amino-, OH-, SH-Gruppen sowie Amidgruppen (Polyamidoamin). Als Polyamine (b) sind auch andere für Epoxidharze bekannte Härter, wie Mannich-Basen, Addukte von Aminen an Polymere, wie Polyepoxide, sowie Melaminderivate, Piperazine, Polyoxyalkylenamine udgl. verwendbar. Es können auch Gemische verschiedener Polyamine (b) eingesetzt werden, insbesondere bei Verwendung von Aminen mit verkappten Aminogruppen, um die mittlere Funktionalität auf den gewünschten Wert einzustellen.

Als Beispiele für derartige Polyamine (b) seien hier genannt: Isophorondiamin, das Addukt aus 1 mol Isophorondiamin und 1 mol Acrylnitril; Ethylendiamin, Diethylentriamin und höhere Homologe, wie z.B. Pentaethylenhexamin; Hexamethylendiamin; 2-Methylpentamethylendiamin; Polypropylendi- bzw. triamine (Jeffamine®) Trimethylhexamethylendiamin; Bishexamethylentriamin-, N,N-Dimethylaminopropylamin, N,N-Diethylaminopropylamin; weiterhin Amine, wie sie in der DE 36 44 371 beschrieben sind; 2-Ethylhexylamin, Triacetondiamin, N-Methyldipropylentriamin, das Umsetzungsprodukt von 2 mol MIBK mit 1 mol Triethylentetramin, etc. Ganz besonders bevorzugt sind dabei m-Xylylendiamin, Bishexamethylentriamin, Neopentandiamin und Cyclohexan-1,2-diamin

Bezüglich weiterer geeigneter Polyamine sei auf die bereits erwähnte DE-Offenlegungsschrift 3 820 301 verwiesen.

Zur Herstellung einer wäßrigen Mikrogeldispersion aus (a) und (b) wird die Polyepoxiddispersion, deren mittlere Teilchengröße zweckmäßiger nicht mehr als 1,0 μm, vorzugsweise 0,3 bis 0,8 μm beträgt, im allgemeinen bei etwa 20 bis 80°C, vorzugsweise bei 50-90°C und insbesondere bei 60-80°C vorgelegt und das Polyamin (b) während 1 bis 60, insbesondere 1-5 Minuten eingetragen. Anschließend wird diese Mischung für einige Zeit, im allgemeinen ca. 1 bis 6 Stunden bei Raumtemperatur oder erhöhter Temperatur, in der Regel bei ca. 20 bis 95°C unter guter Rührung gehalten. Die Menge an (b) richtet sich dabei nach dem Epoxidäquivalentgewicht der Epoxidharzdispersion derart, daß 25 bis 100 % der Epoxidäquivalente mit Amin umgesetzt werden, vorzugsweise 50 bis 100 % und ganz besonders bevorzugt 90 bis 100 %. Die so erhaltenen Mikrogel-Dispersionen, denen evtl. noch weitere Lackadditive, wie weitere Füllstoffe, Pigmente, Katalysatoren udgl. zugegeben werden können, sind äußerst flockungsstabil und zeigen während mehrerer Tage keine Sedimentation; die Teilchengröße ist höchstens 5 μm, vorzugsweise kleiner als 2 μm und insbesondere kleiner als 1 μm.

Diese Mikrogel-Dispersionen bzw. die daraus isolierten Mikrogele zeigen eine ausreichende Feinheit, die einen Einsatz ohne weiteres Anreiben bzw. Vermahlen ermöglicht; sie können daher direkt als wäßrige Dispersion eingesetzt werden und ermöglichen demgemäß eine stark vereinfachte Handhabung und ein Einstellen eines in Grenzen variablen Pigment-Bindemittelverhältnisses (PBV). Die bevorzugten Bereiche des Pigment-Bindemittel-Verhältnisses, wobei die Bezeichnung Pigment hier als Summe für alle anorganischen und organischen Pigmente, Füllstoffe udgl. stehen soll, liegen bei 0,1:1 bis 1,5:1 und ganz besonders bevorzugt bei 0,15:1 bis 0,6:1 (Gewichtsteile = GT).

Bedingt durch die geringe Dichte (g~ 1) der Mikrogele zeichnen sich die Lacksysteme durch eine hohe Ergiebigkeit aus (zum Vergleich: Titandioxid g~ 4), d.h. das erzielbare Beschichtungsvolumen kann mit einer deutlich geringeren Pigmentgewichtsmenge erfolgen als mit anorganisch gefüllten Systemen.

Zusätzlich wurde gefunden, daß derartige Mikrogele auch einen hervorragenden Korrosionsschutz (560 h; ASTM-B 117-64; Salzsprühtest auf Bonder 132 - 20 µm Schicht; Unterwanderung am Schnitt < 1 mm) bewirken und die Kraterbildung vermindern.

## Beispiele

Alle Mengenangaben sind in Gewichtsteilen.
Der Siebrückstand und die "L-Blechbeschichtung" wurden folgendermaßen bestimmt bzw. durchgeführt:

## Siebrückstand:

1 l der verdünnten Lacklösung wurde durch ein gewogenes Perlonsieb (Maschenweite 30 µm) gegossen. Das Sieb wurde dann mit deionisiertem Wasser nachgespült und nach Trocknung (1 h/125°C) gewogen. Die Differenz der beiden Wägungen ergibt den Siebrückstand in mg auf 1000 ml Bad bezogen.

## "L-Blech-Beschichtung"

Ein zinkphosphatiertes Stahlblech (zirka 10 x 20 cm) wurde am unteren Ende rechtwinklig gebogen (3 cm waagrechte Fläche) und im Beschichtungsbad so eingehängt, daß der waagrechte Schenkel des "L" etwa 15 cm unter der Oberfläche des Lackbades ist. Die Beschichtung erfolgte bei abgestellter Rührung und mit einer Beschichtungsdauer von 4 min. Nach Ende der Beschichtung verblieb das Blech noch 2 min. im Bad. Anschließend wurde das Blech aus dem Bad genommen, nach weiteren 2 min. mit Wasser gespült und eingebrannt. Das Blech wurde visuell hinsichtlich Verlauf, Glanz und Sedimentationserscheinungen beurteilt.

### (1) Herstellung der Epoxidharzdispersionen analog dem in der DE-Patentanmeldung 38 20 301 (HOE 88/F 152) beschriebenem Verfahren:

### (1.1). Herstellung des Emulgators (Dispergiermittel):

4000 Teile PEG 4000 (ca. 1 mol, Polyethylenglykol mit einer mittleren Molmasse von ca. 4000; HOECHST AG) wurden mit 971 Teilen Toluol bei 130-140°C im Kreislauf entwässert. Anschließend wurde bei 100-120°C und Vakuum von Lösemittel befreit und mit 5,2 Teilen $HBF_4$ (50 % in Wasser) versetzt. In diese gut gerührte Lösung wurden langsam bei 100-130°C 421 Teile Beckopox® EP 140 (ca. 1,15 mol, Diglycidylether von Bisphenol-A, EV~183; HOECHST AG) einlaufen gelassen und bis zu einem EV von ca. 10 000 bei dieser Temperatur gehalten.

### (1.2). Herstellung der Epoxidharze:

[A] Teile (s. nachfolgende Tabelle 1) obiger Lösung wurden in eine Mischung bestehend aus 366 Teilen Beckopox® EP 140, 110 Teilen Bisphenol-A (ca. 0,48 mol) und 0,68 Teilen Triphenylphosphin eingetragen, anschließend wurde auf 150-180°C erhitzt und bis zu einem Epoxydequivalentgewicht (EV) im Bereich von a bis b (s. Tabelle 1) auf dieser Temperatur gehalten.

### (1.3). Herstellung vernetzungsaktiver Epoxidharze:

Zu der unter (1.2) erhaltenen Epoxidharzschmelze werden 596 Teile Verbindung (3.1) (ca. 1,9 Äquivalente NCO) bei 80-100°C während 30-60 min einlaufen gelassen und bis zu einem % NCO-Wert von praktisch 0 auf dieser Temperatur gehalten (ca. 28,5 % TDI/Festharz). EV = a bis b (s. Tabelle 1)

### (1.4). Herstellung von Epoxidharzen mit zugemischtem vollverkappten Polyisocyanat (vernetzungsaktiver Zumischhärter: ca. 12,2 % TDI/Festharz

Zu der unter (1.2) erhaltenen Epoxidharzschmelze wurden 416 Teile Verbindung (3.2) bei 80-100°C während 20-40 min eingetragen und auf dieser Temperatur gehalten, bis eine blanke, homogene Lösung erreicht war; anschließend wurde im Vakuum bei 80°C das Lösemittel abgezogen. EV = a bis b (s. Tabelle 1)

### (2). Herstellung der Dispersion:

Danach wurden die Harzschmelzen (1.2) bis (1.4) mit [B] Teilen Methoxypropanol-2 bei 80-1200C verdünnt und bei guter Rührung und 60-800C durch Einbringen von [C] Teilen entionisiertem Wasser dispergiert und über einen Siebsack mit 70 µm Maschenweite filtriert.

## Tabelle 1

| ($\bar{d}n$) | Dispersion | Harzschmelze | Teile | | | $EV_1$ | $EV_2$ | FK(%) | mPas |
|---|---|---|---|---|---|---|---|---|---|
| | | | [A] | [B] | [C] | | | | (25°C) |
| | | | | | **a bis b** | | | | |
| < 1 µm | (2.1) | (1.2) 529T | 53 | 120 | 368 | 505–525 | 970–1000 | 51–53 | 1500–2000 |
| < 2 µm | (2.2) | (1.3) 1222T | 150 | 300 | 922 | 1160–1190 | 2320–2380 | 49–51 | 1800–2500 |
| < 2 µm | (2.3) | (1.4) 867T | 100 | 200 | 667 | 820–840 | 1640–1680 | 49–51 | 2000–2700 |

$\bar{d}n$ = mittlere Teilchengröße
FK = Festkörper (1 g; 1h, 125°C)
$EV_1$= Harzschmelze
$EV_2$= Dispersion

**(3). Herstellung der (teil-)verkappten Polyisocyanate:**

(3.1). Zu 174 Teilen Desmodur® T 80 (80 % 2,4-, 20 % 2,6-Toluylendiisocyanat; ca 1 mol) wurden bei 40-60°C während 60-120 min 124 Teile (1,05 mol) Butylglykol und 0,3 Teile Dibutylzinnlaurat (DBTL) einlaufen gelassen und anschließend bis zu einem % NCO-Wert von ca. 12,8-13,5 bei dieser Temperatur gehalten.

(3.2). Zu 298 Teilen der Verbindung (3.1) in 146 Teilen Toluol wurden portionsweise 42,4 Teile Trimethylolpropan eingebracht und bei 80°C bis zu einem % NCO-Wert von praktisch 0 umgesetzt (ca. 70 %ig, 51 % TDI).

**(4). Herstellung der Mikrogel-Suspension:**

[D] Teile (s. nachfolgende Tabelle 2) der Dispersionen gemäß (2.1) bis (2.3) wurden bei 40 bis 80°C mit [E] Teilen Amin (Tabelle 2) umgesetzt bis ein EV von > 100 000 erreicht war. Anschließend wurde mit [F] Teilen entionisiertem Wasser auf 50 % Festkörper eingestellt.

**Tabelle 2:**

| Mikrogel-Suspension | Dispersion | Teile [D] | [E] | [F] | Amin | d̄n(μm) | %TDI fest | Disp. | Tg* (°C) |
|---|---|---|---|---|---|---|---|---|---|
| (4.1) | (2.1) | 985 | 34 | 73,4 | mXDA | < 1 | 0 | | 83 |
| (4.2) | (2.1) | 985 | 43 | 82,4 | BisH | < 2 | 0 | | 80 |
| (4.3) | (2.2) | 2350 | 34 | 34 | mXDA | < 1 | 27,7 | 13,85 | 55 |
| (4.4) | (2.2) | 2350 | 43 | 43 | BisH | < 2 | 27,5 | 13,75 | 53 |
| (4.5) | (2.3) | 1660 | 34 | 34 | mXDA | < 2 | 11,7 | 5,85 | 90 |

\* Die Glasübergangstemperatur wurde an den durch Elektrolytfällung (2 Teile 0,5 N MgSO₄-Lösung auf 1 Teil Disp.) mit E-Wasser gereinigten, isolierten Mikrogelen, die anschließend bei 30°C (auf Gewichtskonstanz) im Vakuumofen getrocknet wurden, mittels DSC bestimmt. In den überstehenden klaren Lösungen konnten keine Amine nachgewiesen werden.

mXDA = m-Xylylendiamin (HAV f34)
BisH = Bishexamethylendiamin (HAV f43)
HAV = Aminoäquivalentgewicht
DSC = Differential-scanning-calorimetry

Die isolierten Mikrogele waren in den getesteten organischen Lösemitteln (Methoxy-(Ethoxy-)propanol-2, Mischung aus Texanol/Butylglykol (1/1), Ethanol, Dimethyldiglykol, Eisessig, Aceton) nicht löslich. Eine wäßrige Suspension der Mikrogele zeigte bei Zusatz wassermischbarer organischer Lösemittel ein Anwachsen von dn auf einen konstantem Endwert, um bis zu 30 % (Quellen der Mikrogele), während 2 Wochen.

**(5). Prüfung der erfindungsgemäßen Mikrogele:**

(5.1).Bereitung der Bindemittel-Dispersion

(5.1.1).Analog der EP-Offenlegungsschrift 86, Beispiel 31, wurde ein Epoxidaminaddukt hergestellt:

210 Teile Diethanolamin, 102 Teile N,N-Dimethylaminopropylamin und 636 Teile eines Adduktes aus 1 mol 2-Methylpentamethylendiamin und 2 mol Glycidylester der Versaticsäure (Cardura® E10 von Shell) wurden zu 3400 Teilen Bisphenol-A-Epoxidharz (Äquivalentgewicht ca. 480) in 2341 Teilen Methoxypropanol-2 (ca. 65 %ig) gegeben. Das Reaktionsgemisch wurde 4 Stunden unter Rühren bei 60 bis 90°C und dann eine Stunde bei 120°C gehalten.

Hydroxylzahl:  ca. 155 mg KOH/g Festharz
Aminzahl:  ca. 77 mg KOH/g Festharz

(5.1.2). [A] Teile (s. nachfolgende Tabelle 3)

Bindemittellösung (5.1.1) wurden mit [B] Teilen Härterlösung (3.2), 5 Teilen Texanol, 1,5 Teilen 2-Ethylhexanol und 2,3 Teilen 50 %iger wäßriger Ameisensäure (meq ~25) vermischt und im Vakuum (bis zu 20 mbar) bei Temperaturen bis zu 80°C auf ca. 90 % Festkörper eingeengt. Anschließend wurde mit 139 Teilen entionisiertem Wasser bei guter Rührung eine 40 %ige Dispersion hergestellt:

Tabelle 3

| Bindemittel-Dispersion | Teile | | | | % TDI/Bindemittel |
|---|---|---|---|---|---|
| | [A] | [B] | $\bar{d}n$ (µm) | $\bar{d}w$ (µm) | |
| (5.1.3) | 123,7 | 28,0 | 240 | 560 | 10,0 |
| (5.1.4) | 120,6 | 32,7 | 216 | 500 | 0 |

(5.2) Herstellung eines Pastenharzes und Bereitung einer Pigmentpaste (analog EP-Patentanmeldung 352677 (HOE 88/F 183), Beispiel I. B):

a) Zu einer Lösung von 204 Teilen (2 mol) N,N-Dimethylaminopropylamin in 1224 Teilen Ethoxypropanol wurden bei 60-80°C während einer Stunde 1708 Teile (4 mol) Denacol® EX-145 (Phenol-(EO$_5$)-glycidylether) einlaufen gelassen und anschließend bei 80-100°C gehalten, bis eine Ep-Zahl von praktisch 0 erreicht war (Aminzahl ca. 117 mg KOH/g Feststoff; ca. 60 %ig). Zu dieser Lösung wurden 72 Teile E-Wasser und 400 Teile Milchsäure (90 %ig) unter Kühlen einlaufen gelassen und anschließend mit 128 Teilen Butylglykol auf 60 % verdünnt.

b) 1280 Teile (2 Äquiv. Epoxid) von Beckopox® SEP 311 (75 %ig in Xylol) wurden auf 80°C erwärmt. Zu dieser Lösung wurden während einer Stunde 1184 Teile des Urethans (5.2.d) (75 %ig) einlaufen gelassen und bei 80°C gehalten bis der % NCO-Wert praktisch 0 war. Anschließend wurde im Vakuum vom Lösemittel befreit und mit 1232 Teilen Ethoxypropanol auf ca. 60 % verdünnt.

c) In die unter (5.2.b) erhaltene Lösung wurde (5.2.a) eingetragen und bei 60-80°C gehalten bis eine Säurezahl und Ep-Zahl von praktisch 0 erreicht wurde.

d) Zu 348 Teilen Desmodur® T 80 (80 % 2,4-, 20 % 2,6-Toluylendiisocyanat) in 296 Teilen Xylol wurden bei 40-60°C 540 Teile iso-Octadecylalkohol und 0,9 Teile DBTL während 1 Stunde einlaufen gelassen und anschließend bis zu einem % NCO-Wert von ca. 9,5 bei dieser Temperatur gehalten (ca. 75 %ig).

Aus der Pastenharz-Lösung entsprechend Beispiel (5.2.c) wurden gemäß der nachstehenden Formulierung Pigmentpasten hergestellt:

[A] Teile (s. nachfolgende Tabelle 4) Pastenharzlösung (60 %ig) wurden mit 8,82 Teilen Dibutylzinnoxid versetzt und bei 40-60°C während einer Stunde gut homogenisiert, anschließend wurde mit 10,30 Teilen basischer Bleisilikatpaste (75 %ig in Wasser), 2,94 Teilen Farbruß Printex® 25 und [B] Teile Titanoxid RSE 50 versetzt, gut homogenisiert, anschließend mit E-Wasser auf Mahlviskosität versetzt und auf einer Perlenmühle vermahlen (s.o. DE-Offenlegungsschrift P 37 26 497). Diese Pigmentvorpaste wurde anschließend mit [C] Teilen Mikrogel-Suspension auf einem Dispergiergerät abgemischt und mit E-Wasser auf FK % Festkörper eingestellt. Die Pasten wurden über ein Sieb mit 50 µm Maschenweite filtriert:

Tabelle 4

| Paste | | Mikrogel-Suspension | GT A | GT B | GT C | PBV (GT) Paste | PBV (GT) Bad | %GT Mikrogel Paste | x | FK(%) Paste |
|---|---|---|---|---|---|---|---|---|---|---|
| a | (5.2.1) | (4.1) | 32,0 | 92,9 | 65,8 | 7,7:1 | 0,35:1 | 22,2 | 0,5 | 65 |
| a | (5.3.2) | (4.1) | 32,0 | 23,7 | 105,4 | 5,1:1 | 0,06:1 | 53,3 | 0,8 | 65 |
| b | (5.2.3) | (4.1) | 23,0 | 11,0 | 75,6 | 5,1:1 | 0,17:1 | 53,3 | 0,8 | 65 |
| c | (5.2.4) | (4.1) | 38,8 | 93,8 | 66,6 | 6,4:1 | 0,35:1 | 22,2 | 0,5 | 65 |
| c | (5.2.5) | (4.1) | 38,8 | 24,0 | 106,4 | 4,3:1 | 0,24:1 | 53,3 | 0,8 | 65 |
| d | (5.2.6) | (4.1) | 79,7 | 4,8 | 311,2 | 3,8:1 | 0,4:1 | 84,5 | 0,95 | 55 |
| e | (5.2.7) | (4.1) | 70,0 | 14,2 | 410,4 | 5,8:1 | 0,55:1 | 84,5 | 0,95 | 55 |
| e | (5.2.8) | (4.2) | 32,0 | 92,9 | 65,8 | 7,7:1 | 0,35:1 | 22,2 | 0,5 | 65 |
|  | (5.2.9) | (4.3) | 35,0 | 36,7 | 134,3 | 6,0:1 | 0,3:1 | 53,2 | – | 65 |
|  | (5.2.10) | (4.5) | 31,4 | 7,2 | 318,0 | 10:1 | 0,45:1 | 84,4 | – | 55 |
|  | (5.2.11) | Vergl.-paste a) | 32,0 | 208,2 | – | 12:1 | 0,55:1 | – | – | 75 |
|  | (5.2.12) | Vergl.-paste b) | 23,0 | 143,4 | – | 12:1 | 0,40:1 | – | – | 75 |
|  | (5.2.13) | Vergl.-paste c) | 38,8 | 210,3 | – | 10:1 | 0,55:1 | – | – | 75 |
|  | (5.2.14) | Vergl.-paste d) | 79,6 | 549,3 | – | 12:1 | 1,28:1 | – | – | 75 |
|  | (5.2.15) | Vergl.-paste e) | 70,0 | 732,4 | – | 18:1 | 1,71:1 | – | – | 75 |

$0 < x < 1$, Substitutionsgrad des durch die Mikrogele (Mg) ersetzten Pigmentanteils (P) (volumenmäßig auf Titanoxid bezogen).

Tabelle 5

| Prüfkombination | 1000 T Dispersion | T | Paste |
|---|---|---|---|
| 5.3.1 | 5.1.4 | 253,1 | 5.2.1 |
| 5.3.2 | 5.1.4 | 177,1 | 5.2.2 |
| 5.3.3 | 5.1.4 | 126,3 | 5.2.3 |
| 5.3.4 | 5.1.4 | 261,4 | 5.2.4 |
| 5.3.5 | 5.1.4 | 184,6 | 5.2.5 |
| 5.3.6 | 5.1.4 | 414,0 | 5.2.6 |
| 5.3.7 | 5.1.4 | 510,7 | 5.2.7 |
| 5.3.8 | 5.1.4 | 253,1 | 5.2.8 |
| 5.3.9 | 5.1.3 | 222,1 | 5.2.9 |
| 5.3.10 | 5.1.3 | 371,8 | 5.2.10 |
| 5.3.11 | 5.1.4 | 329,2 | 5.2.11 |
| 5.3.12 | 5.1.4 | 235,6 | 5.2.12 |
| 5.3.13 | 5.1.4 | 337,5 | 5.2.13 |
| 5.3.14 | 5.1.4 | 1233,2 | 5.2.14 |
| 5.3.15 | 5.1.4 | 1058,5 | 5.2.15 |

i.O. =          Beschichtung in Ordnung, keine Sedimentationserscheinungen.
LM =          leichte Mattierung.
M =          matt, leichte Sedimentationserscheinungen.
S =          deutliche Sedimentationserscheinungen.
u.i.O. =          deutliche Verlaufsstörungen, Filmunbrauchbarkeit.

(5.3) Die Pasten wurden dann einem verdünnten Klarlack

(25 %ige wäßrige Lösung), der unter (5.1.3) und (5.1.4) beschriebenen K-ETL-Bindemittel-Dispersion unter Rühren zugesetzt und anschließend mit E-Wasser auf 18 % Festkörper (1 h, 125°C), eingestellt (Prüfkombinationen Tabelle 5, PBV Tabelle 4). Die Prüfkombinationen wurden der kataphoretischen Abscheidung in einem offenen Glasgefäß unterworfen. Als Kathode diente phosphatiertes Stahlblech (Bonder® 26 der Chemetall) und als Anode, im Abstand von 5 bis 10 cm von der Kathode, blankes Stahlblech. Die Badtemperatur lag bei 32°C, die Abscheidedauer betrug 2 min.

Zusätzlich wurde nach 24 Stunden, 14 Tagen und 4 Wochen (Rühren bei Raumtemperatur) der Siebrückstand bestimmt und eine "L-Blech-Beschichtung" durchgeführt.

Die Ergebnisse sind in Tabelle 6 zusammengefaßt Die beschichteten Bleche wurden bei 170°C, 20 min. Ofentemperatur (Umluft) eingebrannt.

**Tabelle 6:**

| Prüfkomb. | Aufbruch [V] | Schicht [μm (300 V] | VDA-Wechseltest 10 Runden [mm]Unterwanderung | Siebrückstand [mg/l] nach | | | "L-Blech" nach | | |
|---|---|---|---|---|---|---|---|---|---|
| | | | | 24h | 14d | 4wo | 24h | 14d | 4wo |
| 5.3.1 | 375 | 20 | 1-1,5 | < 5 | 20 | 100 | i.O. | i.O. | LM |
| 5.3.2 | 375 | 21-23 | 1-1,2 | 10 | 30 | 50 | i.O. | i.O. | i.O. |
| 5.3.3 | 350 | 18-19 | 1-1,2 | 10 | 20 | 20 | i.O. | i.O. | i.O. |
| 5.3.4 | 375 | 17-18 | 1,2-1,5 | 5 | 30 | 60 | i.O. | i.O. | i.O. |
| 5.3.5 | 325 | 20-22 | 1-1,2 | < 5 | 20 | 40 | i.O. | i.O. | i.O. |
| 5.3.6 | 325 | 22-23 | 1-1,2 | 20 | 20 | 60 | i.O. | i.O. | LM |
| 5.3.7 | 325 | 24-26 | 1-1,5 | 30 | 50 | 60 | i.O. | i.O. | i.O. |
| 5.3.8 | 375 | 20 | 1,5 | < 5 | 20 | 30 | i.O. | i.O. | i.O. |
| 5.3.9 | 350 | 18-19 | 1,2-1,7 | 30 | 50 | 80 | i.O. | LM | LM |
| 5.3.10 | 325 | 18-20 | 1-1,5 | 50 | 80 | 100 | i.O. | i.O. | M |
| 5.3.11 | 350 | 18-19 | 1-1,5 | 50 | 80 | 100 | i.O. | i.O. | LM |
| 5.3.12 | 350 | 17-18 | 1,2-1,5 | 10 | 30 | 80 | i.O. | i.O. | i.O. |
| 5.3.13 | 350 | 18-20 | 1-1,5 | 20 | 50 | 90 | i.O. | LM | LM |
| 5.3.14 | 350 | 18-24* | 1,5-2,2 | 80 | 500 | 800 | LM | S | u.i.O. |
| 5.3.15 | 350 | 18-24* | 2-2,5 | 70 | 450 | 1000 | S | u.i.O. | u.i.O. |

* Film sehr wellig

EP 0 421 238 B1

**5.4. Herstellung eines Automobilserienfüllers auf wäßriger Basis**

a) Hydrofüller auf Basis einer OH-funktionellen Polyurethandispersion unter Verwendung herkömmlicher Pigmente

In einer Perlmühle wird ein Gemisch aus 63,0 Gew.-Teilen einer OH-funktionellen Polyurethandispersion (39 %ig), 6,2 Gew.-Teilen eines Melaminharzes, 14,5 Gew.-Teilen Titandioxid CL 310$^R$ (Kronos Titan GmbH), 9,2 Gew.-Teilen Blanc fixe micro$^R$ (Sachtleben GmbH) und 6,2 Gew.-Teilen Talkum Mistron Vapor (Chemag) mit 6500 Umdrehungen pro Minute bis zu einer Mahlgutfeinheit <10 μm (ca. 30 Minuten) gemahlen. Mit Dimethylethanolamin wird der pH-Wert auf 8,3 + 0,2 eingestellt Die Auslauf-Viskosität (DIN 53 211, 23°C) dieses Hydrofüllers beträgt 70-80 s, das Bindemittel/Pigmentverhältnis 1:1, der Festkörpergehalt (DIN 53 216) ca. 53 %. Nach Einstellung der Spritzviskosität von 28 s (DIN 53 211) mit Wasser wird mit pneumatischer Handspritzpistole bei 3 bar Spritzdruck in 2 Kreuzgängen mit ca. 1 Minute Zwischenlüftzeit appliziert, für 10 Minuten bei 80°C vorgetrocknet und schließlich für 15 Minuten bei 165°C eingebrannt. Die resultierende Beschichtung zeigt einen Glanzgrad (60°-Winkel) von 65-70 %, die Pendelhärte (nach König) beträgt 50 s.

Die Steinschlagfestigkeit im Aufbau KTL, Füller und Decklack (je nach Decklack-Typ), beurteilt nach VW-Methode, ergibt einen Kennwert von 1-3.

b) Hydrofüller auf Basis einer OH-funktionellen Polyurethandispersion unter Mitverwendung von Mikrogel-Suspension (4.1) und (4.2)

In einer Perlmühle wird eine Mischung aus 63,0 Gew.-Teilen einer OH-funktionellen Polyurethandispersion VTW 1220, 6,2 Gew.-Teilen eines Melaminharzes und 6,2 Gew.-Teilen Titandioxid CL 310$^R$ gegeben und bei ca. 6500 Umdrehungen pro Minute bis zu einer Mahlgutfeinheit <10 μm (ca. 30 Minuten) gemahlen. Unter leichtem Rühren werden 12,3 Gew.-Teile der Mikrogel-Suspension (4.1) zugefügt. Mit Dimethylethanolamin wird gegebenenfalls der pH-Wert auf 8,2 + 0,2 korrigiert und die Spritzviskosität von 28 s (DIN 53 211) mit deionisiertem Wasser eingestellt. Das Pigment/Bindemittelverhältnis betägt 1:2,5, das Pigmentvolumen/Bindemittelvolumenverhältnis 1:1, der Festkörper 41 %. Aus diesem Hydrofüller erhaltene Beschichtungen (vgl. Beispiel a) zeigen einen Glanzgrad von 90 % (60°-Winkel), eine Pendelhärte von 48 s nach König und ergeben im Steinschlagtest mit 1 kg Stahlschrot bei 2 bar Druck Kennwerte von 1-3.

c) Das Beispiel b) wird mit den Unterschieden wiederholt, daß anstelle von 6,2 Gew.-Teilen Titandioxid$^R$ CL 310 15,4 Gew.-Teile und anstelle 12,3 Gew.-Teile der Mikrogel-Suspension 30,8 Gew.-Teile verwendet werden. Das Pigment/Bindemittelverhältnis des so hergestellten Hydrofüllers beträgt 1:1, das Pigmentvolumen/Bindemittelvolumenverhältnis 2,5:1 und der Festkörper (DIN 53 216) 46 %. Mit diesem Hydrofüller angefertigte Beschichtungen weisen einen Glanzgrad von 88 % (60°-Winkel) und eine Pendelhärte von 61 s nach König auf. Im Steinschlagtest werden Kennwerte von 1-3 erzielt.

d) Beispiel b) wird mit dem Unterschied wiederholt, daß anstelle von 12,3 Gew.-Teilen Mikrogel-Suspension (4,1) 12,3 Gew.-Teile Mikrogel-Suspension (4,2) verwendet werden. Das Pigment/Bindemittelverhältnis betägt 1;2,5, das Pigmentvolumen/Bindemittelvolumenverhältnis 1;1, der Festkörper 40 %. Beschichtungen, aus diesem Hydrofüller gefertigt, ergeben in Glanzgrad und Steinschlagtestkennwert mit dem Beispiel a) übereinstimmende Resultate. Der Pendelhärtewert deagegen liegt bei 30 s (nach König).

**Patentansprüche**

**Patentansprüche für folgende Vertragsstaaten : AT, BE, DE, DK, FR, GB, IT, NL, SE**

1. Verwendung von vernetzten Polymer-Mikrogelteilchen als Füllstoff und/oder als teilweiser Ersatz von Weißpigmenten in wäßrigen Lackzubereitungen, dadurch gekennzeichnet, daß die Polymer-Mikrogelteilchen

   - noch vernetzungsaktive Zentren enthalten,
   - eine mittlere Teilchengröße von höchstens 5 μm besitzen,
   - eine Glasübergangstemperatur von mindestens 30 °C aufweisen, und
   - durch Umsetzung von epoxygruppenhaltigen Verbindungen (a) mit Polyaminen (b) hergestellt worden sind, wobei die Funktionalität von (a) größer als 1 ist, und die Funktionalität von (b) im statistischen Mittel 2 oder größer als 2 ist.

2. Verwendung nach Anspruch 1, dadurch gekennzeichnet, daß es sich bei dem Weißpigment um Titandioxid handelt.

3. Verwendung nach Anspruch 1, dadurch gekennzeichnet, daß es sich bei den wäßrigen Lackzubereitungen um Elektrotauchlacke oder um Füllerlacke handelt.

4. Verwendung nach Anspruch 1, dadurch gekennzeichnet, daß die mittlere Teilchengröße im Bereich von 0,3 bis 1,0 µm liegt und die Glasübergangstemperatur 50 bis 140 °C beträgt.

5. Verwendung nach Anspruch 1, dadurch gekennzeichnet, daß als vernetzungsaktive Zentren verkappte Isocyanatgruppen dienen, die unter den Härtungsbedingungen entkappen.

6. Verwendung nach Anspruch 1, dadurch gekennzeichnet, daß die vernetzten Polymer-Mikrogelteilchen zusätzlich selbstvernetzend sind.

7. Verwendung nach Anspruch 1, dadurch gekennzeichnet, daß die vernetzten Polymer-Mikrogelteilchen in Form einer flockungsstabilen, wäßrigen Dispersion eingesetzt werden, deren Gehalt an vernetzten Polymer-Mikrogelteilchen mindestens 20 Gew.-%, bezogen auf die Dispersion, beträgt.

8. Verwendung nach Anspruch 1, dadurch gekennzeichnet, daß die vernetzten Polymer-Mikrogelteilchen durch Umsetzung von epoxygruppenhaltigen Verbindungen (a) mit Polyaminen (b) hergestellt worden sind, wobei die Funktionalität von (a) 2 bis 10 ist, und die Funktionalität von (b) im statistischen Mittel 2,1 bis 12 ist.

9. Verwendung nach Anspruch 1, dadurch gekennzeichnet, daß die epoxygruppenhaltigen Verbindungen (a) selbstemulgierend sind.

10. Verwendung nach Anspruch 1, dadurch gekennzeichnet, daß die Polyamine (b) m-Xylylendiamin oder Bishexamethylendiamin, Neopentandiamin oder Cyclohexandiamin sind.

11. Flockungsstabile, wäßrige Dispersion von vernetzten Polymer-Mikrogelteilchen mit mittleren Teilchengrößen von höchstens 5 µm, einem Gehalt an den vernetzten Polymer-Mikrogelteilchen mit vernetzungsaktiven Zentren von mindestens 20 Gew.-%, bezogen auf die Dispersion, einer Glasübergangstemperatur (Tg) von mindestens + 30 °C, wobei die vernetzten Polymer-Mikrogelteilchen hergestellt worden sind durch Umsatz von epoxygruppenhaltigen Verbindungen (a) mit Polyaminen (b) und wobei die Funktionalität von (a) größer als eins und von (b) gleich oder größer als zwei ist.

12. Wäßrige Dispersion gemäß Anspruch 11, dadurch gekennzeichnet, daß die epoxygruppenhaltigen Verbindungen (a) selbstemulgierend sind.

13. Wäßrige Dispersion gemäß Anspruch 12, dadurch gekennzeichnet, daß die selbstemulgierenden epoxygruppenhaltigen Verbindungen (a) ein Epoxidäquivalentgewicht zwischen 250 und 10 000 aufweisen und Kondensationsprodukte darstellen aus

$\alpha$) 50 bis 80 Gew.-% einer Epoxidverbindung mit mindestens zwei Epoxidgruppen pro Molekül und einem Epoxidäquivalentgewicht von 100 bis 2000

$\beta$) 35 bis 17 Gew.-% eines aromatischen Polyols und

$\gamma$) 15 bis 3 Gew.-% eines Kondensationsproduktes aus einem aliphatischen Polyol mit einem mittleren Molekulargewicht (Mw) von 200 bis 20 000, einer Epoxidverbindung mit mindestens zwei Epoxidgruppen pro Molekül und einem Epoxidäquivalentgewicht von 100 bis 2000, sowie gegebenenfalls aus einem Mono- und/oder Polyisocyanat, wobei das Äquivalentverhältnis der OH-Gruppen zu den Epoxidgruppen 1:0,85 bis 1:3,5 ist, die Menge an gegebenenfalls vorhandenen Mono- und/oder Polyisocyanat 0,05 bis 5 Gew.-%, bezogen auf die Menge aus aliphatischem Polyol und Epoxidverbindung, beträgt und das Epoxidäquivalentgewicht dieses Kondensationsproduktes zwischen 200 und mindestens 50 000 liegt.

14. Wäßrige Dispersion nach mindestens einem der Ansprüche 11 bis 13, dadurch gekennzeichnet, daß das Epoxidäquivalentgewicht der eingesetzten epoxygruppenhaltigen Verbindungen (a) 450 bis 2500 beträgt.

15. Wäßrige Dispersion nach Anspruch 13 und/oder 14, dadurch gekennzeichnet, daß es sich bei den aliphatischen Polyolen entsprechend ($\gamma$) um Polyalkylenglykole mit Molgewichten (Mw) von 600 bis 12 000 handelt.

16. Wäßrige Dispersion nach mindestens einem der Ansprüche 11 bis 15, dadurch gekennzeichnet, daß die Menge der vernetzten Polymer-Mikrogelteilchen 40 bis 65 Gew.-%, bezogen auf die Dispersion, beträgt.

17. Wäßrige Dispersion nach mindestens einem der Ansprüche 11 bis 16, dadurch gekennzeichnet, daß die vernetzten Polymer-Mikrogelteilchen selbstvernetzend sind.

18. Wäßrige, gegebenenfalls Weißpigmente enthaltende Lackzubereitungen, welche die wäßrigen Dispersionen gemäß mindestens einem der Ansprüche 11 bis 17 oder die daraus isolierten vernetzten Polymer-Mikrogelteilchen enthalten.

19. Wäßrige Lackzubereitungen nach Anspruch 18, dadurch gekennzeichnet, daß die Menge an vernetzten Polymer-Mikrogelteilchen (Feststoff) 15 bis 90 Gew.-%, bezogen auf das Weißpigment, beträgt.

**Patentansprüche für folgenden Vertragsstaat : ES**

1. Verwendung von vernetzten Polymer-Mikrogelteilchen als Füllstoff und/oder als teilweiser Ersatz von Weißpigmenten in wäßrigen Lackzubereitungen, dadurch gekennzeichnet, daß die Polymer-Mikrogelteilchen

    -   noch vernetzungsaktive Zentren enthalten,
    -   eine mittlere Teilchengröße von höchstens 5 µm besitzen,
    -   eine Glasübergangstemperatur von mindestens 30 °C aufweisen, und
    -   durch Umsetzung von epoxygruppenhaltigen Verbindungen (a) mit Polyaminen (b) hergestellt worden sind, wobei die Funktionalität von (a) größer als 1 ist, und die Funktionalität von (b) im statistischen Mittel 2 oder größer als 2 ist.

2. Verwendung nach Anspruch 1, dadurch gekennzeichnet, daß es sich bei dem Weißpigment um Titandioxid handelt.

3. Verwendung nach Anspruch 1, dadurch gekennzeichnet, daß es sich bei den wäßrigen Lackzubereitungen um Elektrotauchlacke oder um Füllerlacke handelt.

4. Verwendung nach Anspruch 1, dadurch gekennzeichnet, daß die mittlere Teilchengröße im Bereich von 0,3 bis 1,0 µm liegt und die Glasübergangstemperatur 50 bis 140 °C beträgt.

5. Verwendung nach Anspruch 1, dadurch gekennzeichnet, daß als vernetzungsaktive Zentren verkappte Isocyanatgruppen dienen, die unter den Härtungsbedingungen entkappen.

6. Verwendung nach Anspruch 1, dadurch gekennzeichnet, daß die vernetzten Polymer-Mikrogelteilchen zusätzlich selbstvernetzend sind.

7. Verwendung nach Anspruch 1, dadurch gekennzeichnet, daß die vernetzten Polymer-Mikrogelteilchen in Form einer flockungsstabilen, wäßrigen Dispersion eingesetzt werden, deren Gehalt an vernetzten Polymer-Mikrogelteilchen mindestens 20 Gew.-%, bezogen auf die Dispersion, beträgt.

8. Verwendung nach Anspruch 1, dadurch gekennzeichnet, daß die vernetzten Polymer-Mikrogelteilchen durch Umsetzung von epoxygruppenhaltigen Verbindungen (a) mit Polyaminen (b) hergestellt worden sind, wobei die Funktionalität von (a) 2 bis 10 ist, und die Funktionalität von (b) im statistischen Mittel 2,1 bis 12 ist.

9. Verwendung nach Anspruch 1, dadurch gekennzeichnet, daß die epoxygruppenhaltigen Verbindungen (a) selbstemulgierend sind.

10. Verwendung nach Anspruch 1, dadurch gekennzeichnet, daß die Polyamine (b) m-Xylylendiamin oder Bishexamethylendiamin, Neopentandiamin oder Cyclohexandiamin sind.

11. Verfahren zur Herstellung von flockungsstabilen, wäßrigen Dispersionen von vernetzten Polymer-Mikrogelteilchen mit vernetzungsaktiven Zentren und mit mittleren Teilchengrößen von höchstens 5 µm, einem Gehalt an den vernetzten Polymer-Mikrogelteilchen von mindestens 20 Gew.-%, bezogen auf die Dispersion und einer Glasübergangstemperatur (Tg) von mindestens + 30 °C, dadurch gekennzeichnet, daß man eine wäßrige Dispersion von epoxygruppenhaltigen Verbindungen (a) mit Polyminen (b) umsetzt, und wobei die Funktionalität von (a) größer als eins und von (b) gleich oder größer als zwei ist.

12. Verfahren gemäß Anspruch 12, dadurch gekennzeichnet, daß man epoxygruppenhaltige Verbindungen (a) nimmt, die selbstemulgierend sind.

13. Verfahren gemäß Anspruch 12, dadurch gekennzeichnet, daß man selbstemulgierende epoxygruppenhaltige Verbindungen (a) nimmt, die ein Epoxidäquivalentgewicht zwischen 250 und 10 000 aufweisen und Kondensationsprodukte darstellen aus

α) 50 bis 80 Gew.-% einer Epoxidverbindung mit mindestens zwei Epoxidgruppen pro Molekül und einem Epoxidäquivalentgewicht von 100 bis 2000

β) 35 bis 17 Gew.-% eines aromatischen Polyols und

γ) 15 bis 3 Gew.-% eines Kondensationsproduktes aus einem aliphatischen Polyol mit einem mittleren Molekulargewicht (Mw) von 200 bis 20 000, einer Epoxidverbindung mit mindestens zwei Epoxidgruppen pro Molekül und einem Epoxidäquivalentgewicht von 100 bis 2000, sowie gegebenenfalls aus einem Mono- und/oder Polyisocyanat, wobei das Äquivalentverhältnis der OH-Gruppen zu den Epoxidgruppen 1:0,85 bis 1:3,5 ist, die Menge an gegebenenfalls vorhandenen Mono- und/oder Polyisocyanat 0,05 bis 5 Gew.-%, bezogen auf die Menge aus aliphatischem Polyol und Epoxidverbindung, beträgt und das Epoxidäquivalentgewicht dieses Kondensationsproduktes zwischen 200 und mindestens 50 000 liegt.

14. Verfahren nach mindestens einem der Ansprüche 11 bis 13, dadurch gekennzeichnet, daß man epoxygruppenhaltigen Verbindungen (a) nimmt, deren Epoxidäquivalentgewicht 450 bis 2500 beträgt.

15. Verfahren nach Anspruch 13 und/oder 14, dadurch gekennzeichnet, daß man als aliphatische Polyole entsprechend (γ) Polyalkylenglykole mit Molgewichten (Mw) von 600 bis 12 000 nimmt.

16. Verfahren nach mindestens einem der Ansprüche 11 bis 15, dadurch gekennzeichnet, daß man Dispersionen mit einem Gehalt an vernetzten Polymer-Mikrogelteilchen von 40 bis 65 Gew.-%, bezogen auf die Dispersion, herstellt.

17. Verfahren nach mindestens einem der Ansprüche 11 bis 16, dadurch gekennzeichnet, daß man Dispersionen von Polymer-Mikrogelteilchen herstellt, die selbstvernetzend sind.

18. Verfahren zur Herstellung von wäßrigen, gegebenenfalls Weißpigmente enthaltenden Lackzubereitungen, dadurch gekennzeichnet, daß man die wäßrigen Dispersionen gemäß mindestens einem der Ansprüche 11 bis 17 oder die daraus isolierten vernetzten Polymer-Mikrogelteilchen in eine Lackzubereitung einarbeitet.

19. Verfahren nach Anspruch 18, dadurch gekennzeichnet, daß die Menge an vernetzten Polymer-Mikrogelteilchen (Feststoff) 15 bis 90 Gew.-%, bezogen auf das Weißpigment, beträgt.

**Claims**

**Claims for the following Contracting States : AT, BE, DE, DK, FR, GB, IT, NL, SE**

1. Use of crosslinked polymer microgel particles as a filler and/or as a partial substitute of white pigments in aqueous paint preparations, wherein said polymer microgel particles

- still contain active crosslinking centers
- have an average particle size of not more than 5 µm, have a glass transition temperature of at least 30 °C, and
- have been prepared by reaction of epoxy group-containing compounds (a) with polyamines (b), the functionality of (a) being greater than 1 and the statistical average functionality of (b) being 2 or greater than 2.

2. Use as claimed in claim 1, wherein the white pigment is titanium dioxide.

3. Use as claimed in claim 1, wherein the aqueous paint preparations are electrocoating compositions or filler paints.

4. Use as claimed in claim 1, wherein the average particle size is in the range from 0.3 to 1.0 µm and the glass transition temperature is 50 to 140 ° C.

5. Use as claimed in claim 1, wherein blocked isocyanate groups which deblock under the curing conditions serve as active crosslinking centers.

6. Use as claimed in claim 1, wherein the crosslinked polymer microgelparticles are additionally self-crosslinking.

7. Use as claimed in claim 1, wherein the crosslinked polymer microgelparticles are used in the form of an aqueous dispersion which is stable to flocculation and which contains at least 20 % by weight of crosslinked polymer microgelparticles, relative to the dispersion.

8. Use as claimed in claim 1, wherein the crosslinked polymer microgelparticles have been prepared by reaction of epoxy-containing compounds (a) with polyamines (b), the functionality of (a) being 2 to 10, and the statistical average functionality of (b) being 2.1 to 12.

9. Use as claimed in claim 1, wherein the epoxy-containing compounds (a) are self-emulsifying.

10. Use as claimed in claim 1, wherein the polyamines (b) are m-xylylenediamine or bishexamethylenediamine, neopentane-diamine or cyclohexanediamine.

11. An aqueous dispersion, which is stable to flocculation, of crosslinked polymer microgelparticles having average particle sizes of at most 5 $\mu$m, a content of the crosslinked polymer microgelparticles with active crosslinking centers of at least 20 % by weight, relative to the dispersion, a glass transition temperature (Tg) of at least +30°C, in which the crosslinked polymer microgelparticles have been prepared by reaction of epoxy-containing compounds (a) with polyamines (b) and in which the functionality of (a) is greater than one of (b) is identical to or greater than two.

12. An aqueous dispersion as claimed in claim 11, wherein the epoxy-containing compounds (a) are self-emulsifying.

13. An aqueous dispersion as claimed in claim 12, wherein the self-emulsifying epoxy-containing compounds (a) have an epoxy equivalent weight between 250 and 10,000 and represent condensation prodcuts of

α) 50 to 80 % by weight of an epoxy compound containing at least two epoxy groups per molecule and having an epoxy equivalent weight of 100 to 2,000,
β) 35 to 17 % by weight of an aromatic polyol and
γ) 15 to 3 % by weight of a condensation product of an aliphatic polyol having an average molecular weight (Mw) of 200 to 20,000, with an epoxy compound having at least two epoxy groups per molecule and an epoxy equivalent weight of 100 to 2,000 and, if appropriate, with a mono- and/or polyisocyanate, in which the equivalent ration of the OH groups to the epoxy groups is 1:0.85 to 1:3.5, the amount of any mono- and/or polyisocyanates pressent is 0.05 to 5 % by weight, relative to the amount of aliphatic polyol and epoxy compound, and the epoxy equivalent weight of this condensation product is between 200 and at least 50,000.

14. An aqueous dispersion as claimed in at least one of claims 11 to 13, wherein the epoxy equivalent weight of the epoxy-containing compounds (a) used is 450 to 2,500.

15. An aqueous dispersion as claimed in claim 13 and/or 14, wherein the aliphatic polyols according to (γ) are polyalkylene glycols having molecular weights (Mw) of 600 to 12,000.

16. An aqueous dispersion as claimed in at least one of claims 11 to 15, wherein the amount of the crosslinked polymer microgelparticles is 40 to 65 % by weight, relative to the dispersion.

17. An aqueous dispersion as claimed in at least one of claims 11 to 16, wherein the crosslinked polymer microgelparticles are self-crosslinking.

18. An aqueous paint preparation which may contain white pigments and contains an aqueous dispersion as claimed in at least one of claims 11 to 17 or the crosslinked polymer microgelparticles isolated therefrom.

19. An aqueous paint preparation as claimed in claim 18, wherein the amount of crosslinked polymer microgelparticles (solid) is 15 to 90 % by weight, relative to the white pigment.

**EP 0 421 238 B1**

**Claims for the following Contracting State : ES**

1. Use of crosslinked polymer microgel particles as a filler and/or as a partial substitute of white pigments in aqueous paint preparations, wherein said polymer microgel particles

   - still contain active crosslinking centers
   - have an average particle size of not more than 5 μm, have a glass transition temperature of at least 30 °C, and
   - have been prepared by reaction of epoxy group-containing compounds (a) with polyamines (b), the functionality of (a) being greater than 1 and the statistical average functionality of (b) being 2 or greater than 2.

2. Use as claimed in claim 1, wherein the white pigment is titanium dioxide.

3. Use as claimed in claim 1, wherein the aqueous paint preparations are electrocoating compositions or filler paints.

4. Use as claimed in claim 1, wherein the average particle size is in the range from 0.3 to 1.0 μm and the glass transition temperature is 50 to 140 ° C.

5. Use as claimed in claim 1, wherein blocked isocyanate groups which deblock under the curing conditions serve as active crosslinking centers.

6. Use as claimed in claim 1, wherein the crosslinked polymer microgelparticles are additionally self-crosslinking.

7. Use as claimed in claim 1, wherein the crosslinked polymer microgelparticles are used in the form of an aqueous dispersion which is stable to flocculation and which contains at least 20 % by weight of crosslinked polymer microgelparticles, relative to the dispersion.

8. Use as claimed in claim 1, wherein the crosslinked polymer microgelparticles have been prepared by reaction of epoxy-containing compounds (a) with polyamines (b), the functionality of (a) being 2 to 10, and the statistical average functionality of (b) being 2.1 to 12.

9. Use as claimed in claim 1, wherein the epoxy-containing compounds (a) are self-emulsifying.

10. Use as claimed in claim 1, wherein the polyamines (b) are m-xylylenediamine or bishexamethylenediamine, neopentane-diamine or cyclohexanediamine.

11. A process for the preparation of aqueous dispersions, which are stable to flocculation, of crosslinked polymer microgel particles having active crosslinking centers and an average particle size of at most 5 μm, a content of the crosslinked polymer microgelparticles of at least 20 % by weight, relative to the dispersion, and a glass transition temperature (Tg) of at least +30°C, wherein an aqueous dispersion of epoxy-containing compounds (a) is reacted with polyamines (b), whereby the functionality of (a) is greater than one of (b) is identical to or greater than two.

12. The process as claimed in claim 11, wherein the epoxy-containing compounds (a) employed are self-emulsifying.

13. The process as claimed in claim 12, wherein the self-emulsifying epoxy-containing compounds (a) employed have an epoxy equivalent weight between 250 and 10,000 and represent condensation prodcuts of

   α) 50 to 80 % by weight of an epoxy compound containing at least two epoxy groups per molecule and having an epoxy equivalent weight of 100 to 2,000,
   β) 35 to 17 % by weight of an aromatic polyol and
   γ) 15 to 3 % by weight of a condensation product of an aliphatic polyol having an average molecular weight (Mw) of 200 to 20,000, with an epoxy compound having at least two epoxy groups per molecule and an epoxy equivalent weight of 100 to 2,000 and, if appropriate, with a mono- and/or polyisocyanate, in which the equivalent ration of the OH groups to the epoxy groups is 1:0.85 to 1:3.5, the amount of any mono- and/or polyisocyanates pressent is 0.05 to 5 % by weight, relative to the amount of aliphatic polyol-and epoxy compound, and the epoxy equivalent weight of this condensation product is between 200 and at least 50,000.

14. The process as claimed in at least one of claims 11 to 13, wherein the epoxy equivalent weight of the epoxy-containing compounds (a) used is 450 to 2,500.

**15.** The process as claimed in claim 13 and/or 14, wherein the aliphatic polyols according to (γ) are polyalkylene glycols having molecular weights (Mw) of 600 to 12,000.

**16.** The process as claimed in at least one of claims 11 to 15, wherein dispersions are prepared in which the amount of crosslinked polymer microgelparticles is 40 to 65 % by weight, relative to the dispersion.

**17.** The process as claimed in at least one of claims 11 to 16, wherein dispersions are prepared of polymer microgelparticles which are self-crosslinking.

**18.** A process for preparing aqueous paint preparations which may contain white pigments, wherein the aqueous dispersions as claimed in at least one of claims 11 to 17 or the crosslinked polymer microgelparticles isolated therefrom are worked into a paint composition.

**19.** The process as claimed in claim 18, wherein the amount of crosslinked polymer microgelparticles (solid) is 15 to 90 % by weight, relative to the white pigment.


**Revendications**


**Revendications pour les Etats contractants suivants : AT, BE, DE, DK, FR, GB, IT, NL, SE**

**1.** Utilisation de particules de microgel d'un polymère réticulé comme charge et/ou pour remplacer partiellement des pigments blancs dans des préparations aqueuses pour laques, vernis et peintures, utilisation caractérisée en ce que les particules de microgel de polymère:

- contiennent encore des centres à activité réticulante,
- possèdent une grosseur particulaire moyenne d'au maximum 5 μm,
- présentent une température de transition vitreuse d'au moins 30°C, et
- ont été préparées par réaction de composés (a) comprenant des groupes époxydes avec des polyamines (b), le nombre de groupes fonctionnels (la fonctionnalité) de (a) étant supérieur à 1 et le nombre des groupes fonctionnels de (b) étant en valeur moyenne statistique égal ou supérieur à 2.

**2.** Utilisation selon la revendication 1, caractérisée en ce qu'il s'agit de dioxyde de titane pour le pigment blanc.

**3.** Utilisation selon la revendication 1, caractérisée en ce qu'il s'agit, pour les préparations aqueuses de laques, vernis et peintures, de laques, vernis ou peintures pour immersion électrophorétique ou de laques ou peintures de charge.

**4.** Utilisation selon la revendication 1, caractérisée en ce que la grosseur particulaire moyenne se situe entre 0,3 et 1,0 μm et en ce que la température de transition vitreuse se situe entre 50 et 140°C.

**5.** Utilisation selon la revendication 1, caractérisée en ce que servent de centres à activité réticulante des groupes isocyanates coiffés qui sont décoiffés dans les conditions du durcissement.

**6.** Utilisation selon la revendication 1, caractérisée en ce que les particules de microgel de polymère réticulé sont en outre autoréticulantes.

**7.** Utilisation selon la revendication 1, caractérisée en ce que les particules de microgel de polymère réticulé sont utilisées sous forme d'une dispersion aqueuse stable à la floculation, dont la teneur en des particules de microgels de polymère réticulé vaut au moins 20 % en poids, par rapport à la dispersion.

**8.** Utilisation selon la revendication 1, caractérisée en ce que les particules de microgel de polymère réticulé ont été produites par la réaction de composés (a) contenant des groupes époydes avec des polyamines (b), le nombre des groupes fonctionnels de (a) valant 2 à 10 et le nombre des groupes fonctionnels de (b) valant en moyenne statistique 2,1 à 12.

**9.** Utilisation selon la revendication 1, caractérisée en ce que les composés (a) contenant des groupes époxydes sont autoémulsifiants.

**10.** Utilisation selon la revendication 1, caractérisée en ce que les polyamines (b) sont de la m-xylylène diamine ou de la bishexaméthylène diamine, de la néopentane diamine ou de la cyclohexane diamine.

**11.** Dispersion aqueuse, stable à la floculation, de particules de microgel de polymère réticulé ayant une grosseur moyenne des particules d'au maximum 5 µm, une teneur en des particules de microgel polymère réticulé comportant des centres à activité réticulante d'au moins 20 % en poids, par rapport à la dispersion, une température de transition vitreuse ($T_v$) d'au moins 30°C, les particules de microgel de polymère réticulé ayant été produites par réaction de composés (a) contenant des groupes époxydes avec des polyamines (b) et le nombre des groupes fonctionnels de (a) étant supérieur à 1 et celui de (b) étant égal ou supérieur à 2.

**12.** Dispersion aqueuse selon la revendication 11, caractérisée en ce que les composés (a) contenant des groupes époxydes sont autoémulsifiants.

**13.** Dispersion aqueuse selon la revendication 12, caractérisée en ce que les composés (a) contenant des groupes époxydes et autoémulsifiants présentent un poids d'équivalent d'époxyde compris entre 250 et 10 000 et constituent des produits de condensation de :

α)  50 à 80 % en poids d'un époxyde comportant au moins deux groupes époxydes par molécule et ayant un poids d'équivalent d'époxyde de 100 à 2 000,

β)  35 à 17 % en poids d'un polyol aromatique, et

γ)  15 à 3% en poids d'un produit de condensation d'un polyol aliphatique ayant un poids moléculaire moyen ($M_p$) de 200 à 20 000 et d'un époxyde comportant au moins deux groupes d'époxydes par molécule et ayant un poids d'équivalent d'époxyde de 100 à 2000, ainsi qu'éventuellement d'un monoisocyanate et/ou d'un polyisocyanate, le rapport entre les équivalents des groupes OH et ceux des groupes époxydes valant de 1: 0,85 à 1:3,5, la quantité de monoisocyanate(s) et/ou de polyisocyanate(s) éventuellement présents étant de 0,05 à 5 % en poids, par rapport à la quantité du polyol aliphatique et de l'époxyde, et le poids d'équivalent d'époxyde de ce produit de condensation étant compris entre 200 et au moins 50 000.

**14.** Dispersion aqueuse selon l'une au moins des revendications 11 à 13, caractérisée en ce que le poids d'équivalent d'époxyde des composés (a) contenant des groupes époxydes vaut de 450 à 2500.

**15.** Dispersion aqueuse selon la revendication 13 et/ou 14, caractérisée en ce qu'il s'agit pour les polyols aromatiques selon (γ) de polyalkylène glycols ayant des poids molaires ($M_p$) de 600 à 12 000.

**16.** Dispersion aqueuse selon une au moins des revendications 11 à 15, caractérisée en ce que la proportion des particules de microgel de polymère réticulé vaut 40 à 65% en poids par rapport à la dispersion.

**17.** Dispersion aqueuse selon l'une au moins des revendications 11 à 16, caractérisée en ce que les particules de microgel de polymère réticulé sont autoréticulantes.

**18.** Préparation aqueuse de laques, vernis ou peintures contenant éventuellement des pigments blancs, qui contiennent des dispersions aqueuses selon l'une au moins des revendications 11 à 17 ou les particules des microgels de polymères réticulés isolées à partir de ces dispersions.

**19.** Préparations aqueuses de laques, vernis ou peintures selon la revendication 18, caractérisée en ce que la proportion des particules de microgel de polymère réticulé (extrait sec) vaut de 15 à 90% en poids, par rapport au pigment blanc.

**Revendications pour l'Etat contractant suivant : ES**

**1.** Utilisation de particules de microgel de polymère réticulé, comme charge et/ou pour remplacer partiellement des pigments blancs dans les préparations aqueuses de laques, vernis ou peintures, utilisation caractérisée en ce que les particules de microgel de polymère

-  contiennent encore des centres à activité de réticulation,
-  possèdent une grosseur particulaire moyenne d'au maximum 5 µm,
-  présentent une température de transition vitreuse d'au moins 30°C, et

- ont été obtenues par réaction de composés (a) contenant des groupes époxydes avec des polyamines (b), le nombre des groupes fonctionnels de (a) étant supérieur à 1 et le nombre des groupes fonctionnels de (b) étant en moyenne statistique égal ou supérieur à 2.

2. Utilisation selon la revendication 1, caractérisée en ce qu'il s'agit de dioxyde de titane pour le pigment blanc.

3. Utilisation selon la revendication 1, caractérisée en ce qu'il s'agit, pour les préparations aqueuses de laques, vernis ou peintures, de laques, vernis ou peintures pour immersion électrophorétique ou de laques, vernis ou peintures de charge.

4. Utilisation selon la revendication 1, caractérisée en ce que les grosseurs particulaires moyennes se situent entre 0,3 et 1,0 µm et la température de transition vitreuse se situe entre 50 et 140°C.

5. Utilisation selon la revendication 1, caractérisée en ce que servent comme centres à activité de réticulation des groupes isocyanates coiffés, qui sont décoiffés dans les conditions du durcissement.

6. Utilisation selon la revendication 1, caractérisée en ce que les particules de microgel de polymère réticulé sont en outre autoréticulantes.

7. Utilisation selon la revendication 1, caractérisée en ce que les particules de microgel réticulé de polymère sont utilisées sous forme d'une dispersion aqueuse stable à la floculation, dont la teneur en des particules de microgels de polymère réticulé vaut au moins 20 % en poids, par rapport à la dispersion.

8. Utilisation selon la revendication 1, caractérisée en ce que les particules de microgel de polymère réticulé ont été produites par la réaction de composés (a) contenant des groupes époxydes avec des polyamines (b), le nombre des groupes fonctionnels de (a) valant 2 à 10 et le nombre des groupes fonctionnels de (b) valant en moyenne statistique 2,1 à 12.

9. Utilisation selon la revendication 1, caractérisée en ce que les composés (a) contenant des groupes époxydes sont autoémulsifiants.

10. Utilisation selon la revendication 1, caractérisée en ce que les polyamines (b) sont de la m-xylylène diamine ou de la bishexaméthylène diamine, de la néopentane diamine ou de la cyclohexane diamine.

11. Procédé pour la préparation de dispersions aqueuses, stables à la floculation, de particules de microgel de polymère réticulé comportant des centres à activité réticulante et ayant une grosseur moyenne des particules d'au maximum 5 µm, une teneur en des particules de microgel polymère réticulé d'au moins 20 % en poids, par rapport à la dispersion, une température de transition vitreuse ($T_v$) d'au moins 30 °C, characterisé en ce que les particules de microgel de polymère réticulé ont été produites par réaction de composés (a) contenant des groupes époxydes avec des polyamines (b), le nombre des groupes fonctionnels de (a) étant supérieur à 1 et celui de (b) étant égal ou supérieur à 2.

12. Procédé selon la revendication 11, caractérisé en ce qu'on utilise des composés (a) contenant des groupes époxydes, lesquels composés sont autoémulsifiants.

13. Procédé selon la revendication 12, caractérisé en ce qu'on utilise des composés autoémulsifiants contenant des groupes époxydes (a) qui présentent un poids d'équivalent d'époxyde compris entre 250 et 10 000 et constituent des produits de condensation de :

α) 50 à 80 % en poids d'un époxyde comportant au moins deux groupes époxydes par molécule et ayant un poids d'équivalent d'époxyde de 100 à 2 000,
β) 35 à 17 % en poids d'un polyol aromatique, et
γ) 15 à 3 % en poids d'un,produit de condensation d'un polyol aliphatique ayant un poids moléculaire moyen (Mp) de 200 à 20 000 et d'un époxyde comportant au moins deux groupes d'époxydes par molécule et ayant un poids d'équivalent d'époxyde de 100 à 2000, ainsi qu'éventuellement d'un monoisocyanate et/ou d'un polyisocyanate, le rapport entre les équivalents des groupes OH et ceux des groupes époxydes valant de 1: 0,85 à 1:3,5, la quantité de monoisocyanate(s) et/ou de polyisocyanate(s) éventuellement présents étant de 0,05 à 5 % en poids, par rapport à la quantité du polyol aliphatique et de l'époxyde, et le poids d'équivalent d'époxyde de ce produit de condensation étant compris entre 200 et au moins 50 000.

14. Procédé selon l'une au moins des revendications 11 à 13, caractérisé en ce que le poids d'équivalent d'époxyde des composés (a) contenant des groupes époxydes vaut de 450 à 2500.

15. Procédé selon la revendication 13 et/ou 14, caractérisé en ce qu'il s'agit pour les polyols aromatiques selon (γ) de polyalkylène glycols ayant des poids moléculaires (Mp) de 600 à 12 000.

16. Procédé selon une au moins des revendications 11 à 15, caractérisé en ce que la proportion des particules de microgel de polymère réticulé vaut 40 à 65 % en poids par rapport à la dispersion.

17. Procédé selon l'une au moins des revendications 11 à 16, caractérisé en ce que les particules de microgel de polymère réticulé sont autoréticulantes.

18. Procédé pour la préparation de préparations aqueuses de laques, vernis ou peintures contenant éventuellement des pigments blancs,caractérisé en ce que l'on incorpore dans une préparation de vernis les dispersions aqueuses selon l'une au moins des revendications 11 à 17 ou les particules des microgels de polymères réticulés isolées à partir de ces dispersions.

19. Procédé selon la revendication 18, caractérisé en ce que la proportion des particules de microgel de polymère réticulé (extrait sec) va de 15 à 90 % en poids, par rapport au pigment blanc.